# EUROPEAN PATENT SPECIFICATION

(11) **EP 4 377 514 B1**
(45) Date of publication and mention of the grant of the patent: **29.10.2025**
(21) Application number: 22789394.8
(22) Date of filing: 20.09.2022
(51) Int. Cl.: D21H 19/12, B65D 65/42, D21H 19/18, D21H 27/10

(54) **WATER-BORNE HEAT-SEALABLE BARRIER COATINGS**
HEISSSIEGELFÄHIGE BARRIEREBESCHICHTUNGEN AUF WASSERBASIS
REVÊTEMENTS BARRIÈRE THERMOSCELLABLES À BASE D'EAU

(30) Priority: 21.09.2021 US 202163246387 P; 19.11.2021 US 202163281242 P
(43) Date of publication of application: 05.06.2024
(73) Proprietor: Sun Chemical Corporation, Parsippany, NJ 07054 (US)
(72) Inventor: GORDON, Vanessa, Carlstadt, New Jersey 07072 (US); ZHU, Xiaobo, Carlstadt, New Jersey 07072 (US); ZHA, Yongping, Carlstadt, New Jersey 07072 (US); SCHOTTLAND, Philippe, Carlstadt, New Jersey 07072 (US); ARCURIO, Ralph, Carlstadt, New Jersey 07072 (US)
(74) Representative: Carpmaels & Ransford LLP
(86) International application number: PCT/US2022/044136
(87) International publication number: WO 2023/049120

(56) References cited:
- EP-A1- 3 615 730
- WO-A1-2019/094805

## Description

### FIELD OF THE INVENTION

Coatings of the present invention are environmentally friendly, free of styrene, or essentially free of styrene, and contain at least 20% bio-based content. They impart good water, oil, and grease resistance to various substrate materials, such as paper, paperboard, and polymeric materials, in particular paper and paperboard. The coatings contain little to no free styrene, styrene homologues or derivatives, and little to no styrenic material present as part of a monomeric unit of a polymer or copolymer, have enhanced bio-based content, are heat sealable, and when applied to a cellulose substrate, form a coated cellulose substrate or article that is resistant to penetration by grease, oil or water and has low roll block tendency. Coated cellulose-based substrates and articles of the invention can find use in cellulose-based disposable, recyclable or repulpable cartons, tableware, drinking cups, etc.

### BACKGROUND

Food or food service packages using paper or paperboard often require enhanced barrier properties, including oil, grease, water, and/or moisture vapor barrier. To provide these properties, cellulose-based packaging materials are typically provided with a coating that makes the packaging materials liquid-tight and also facilitates forming the container or package by heat sealing. Such coated cellulose materials are often used in making liquid packages and disposable tableware, such as drinking cups, e.g., US Pat. No., 11,173,684. Currently, LDPE (low-density polyethylene) is widely used for coating paper or paperboard due to its good liquid barrier properties (i.e., resistance to water, tea, coffee, etc.) and good heat-sealability. However, the use of LDPE, just like the traditional wax coatings that previously were used, is not the ideal solution.

Waxes had long been used as coatings for paper, cloth, cardboard, etc., to render these products resistant to moisture due to its good liquid barrier properties and good heat-sealability. These waxes, however, possessed low tensile strength and poor ductility and often cracked and/or peeled off the coated article. Further, they seldom displayed good seal strengths. To improve the tensile strength and ductility of a wax, practitioners began adding small amounts of polyethylene to the wax. For example, paraffin wax, and polyethylene were mixed and heated and a fine dispersion of the polyethylene in the wax could be obtained by stirring the mixture until it had significantly cooled. However, the improvements in the tensile strength and ductility were minimal and processing difficulties were encountered.

Further attempts to improve wax as coating, sealant and barrier continued. U.S. Pat. No. 2,877,196 discloses that ethylene-vinyl acetate copolymers are more compatible with petroleum waxes than is polyethylene, but the level of improvement in seal strength was insufficient.

US 3,541,035 discloses a wax composition comprising a wax and from about 2 to about 60 weight percent of an ethylene/acrylic acid copolymer or an ethylene/vinyl ester/ acrylic acid terpolymer. US 3,644,254 discloses a low wax composition comprising 15-25 % of a paraffin wax and a blend of an ethyne/vinyl acetate copolymer, a branched polyethylene and a linear polyethylene.

US 5,763,100 discloses a recyclable paper stock comprising a substrate coated on at least one surface with a water-based emulsion coating comprising 20-90 dry wt. % of an acrylic-styrene copolymer and 5-70 dry wt. % of a wax.

US 5,368,946 discloses a packaging material comprising a substrate having a coating comprising a blend of from about 85 to 95 percent of a hydrocarbon wax and 5 to 15 percent of a styrene/ethylene-butylene/styrene block copolymer.

US 2018/245291 discloses a paper composition with a water-based, heat seal coating comprising styrene acrylate binders or copolymers that have a high glass transition temperature, which provides barrier properties while being heat sealable with minimal tendency to block.

Continued attempts to develop cellulose coatings in which a significantly large proportion of the overall mass is a wax faces significant challenges. For example, US 20190291134 asserts that in providing water resistance to paper-based substrates, wax coatings have limited applications. "In fact, wax coated paper-based substrates are essentially not repulpable and/or recyclable." Moreover, wax coatings are poorly resistant to high temperatures, (e.g., melting), which create difficulties in cups for hot beverages, and are also poorly resistant to low temperatures (e.g., cracking).

Yet, while LDPE is used for imparting properties such as water-, oil- and grease-resistance to a paper-based substrate, there are significant issues related to the preparation and disposal of PE coated paper-based substrates. For example, LDPE does not disintegrate during the repulping process used in the recycling of paper and board packaging, significantly interfering with recovery of useful fiber from the package. Reprocessing packaging to recover wood fibers is an important source of wood fibers, preventing, or at least limiting, the waste of high quality and costly fibers. Presently, nearly all these packages are ultimately discarded into landfills or incinerated, which raises issues with respect to the environment and public health.

Repulpable aqueous coatings are a promising solution to this problem. However, most polymers in aqueous coatings are amorphous and do not have as high a melting point as PE. Therefore, binders or polymers in aqueous coatings often gradually soften or become sticky at elevated temperature (for example, 48.9-54.4°C) and/or pressure in production, storage, shipping, or converting processes of aqueous coated paperboard. Blocking also becomes an issue of the coated paperboard, which is even more critical for aqueous barrier coated paperboard that requires high barrier properties and also needs to be able to heat seal in converting packages such as cups.

Water-based polymer dispersions can find use in forming barrier coatings to replace LDPE on paper, paperboard, and various plastic films. However, synthetic polymers are typically sourced from petroleum. They increase the carbon footprint, make packages and containers difficult to recycle and are problematic in landfills where biodegradability is required. There is an ongoing effort in the packaging industry to use more bio-based raw materials and increase the bio-based content in barrier coatings.

Widely used petroleum-based polymers in barrier coatings include the styrene-acrylic copolymers, such as those used in the art cited above, which can possess high glass transition temperatures and be used as building blocks for other systems. Styrene-acrylic emulsion polymers are cost effective and widely used as an opacifier in cosmetics and personal care products. They possess excellent properties such as low VOCs (volatile organic compound) emission rate, good durability, and UV resistance lending to its use in industries such as paper and packaging, building & construction, paints and coatings, cosmetics and personal care, and others. Further work with similar polymers include:

US 10,961,664 discloses multi-phase polymer binder including an aqueous polymer dispersion, an optional hydrophobic emulsion, and an optional surfactant.

US 20200131708 discloses heat-sealable water-based coating composition for packaging of products that contain grease, oil, water, etc. The coating compositions comprise acrylic polymer or copolymer emulsions and melting waxes.

US 20210107702 discloses the use of coating comprising a styrene acrylic copolymer emulsion for use in hot cup applications.

However, according to the harmonized classification and labelling (ATP06) approved by the European Union, styrene causes damage to organs through prolonged or repeated exposure and is suspected of damaging the unborn child. The State of California in the U.S. places styrene on the Proposition 65 list which contains chemicals known to the State to cause cancer or reproductive toxicity, according to the Safe Drinking Water and Toxic Enforcement Act of 1986. Although no evidence for health risk has been found in commercially available polystyrene food contact materials (FCMs) yet, a styrene-free FCM is superior and preferred as it reduces the potential liability of brand owners and further improves the safety of consumers.

Another polymer with good barrier and heat seal properties is ethylene-acrylic acid copolymer (EAA). For example, WO 2020154167 discloses a coated film structure containing a layer of polymer, and EVOH/EAA barrier coating. It has been employed to provide heat seal properties to a myriad of substrates in packaging applications, i.e., wherein application of heat and pressure to the substrate seals the film to itself or to another substrate.

As many packaging substrates generally exhibit poor heat-sealing characteristics, a heat sealable coating is typically applied to the substrate which allows the substrate to be sealed over a relatively wide temperature range. An ongoing challenge for heat seal coatings is their ability to provide satisfactory hot tack properties to the substrate, i.e., the strength of the heat seal provided when the coating is heated to a temperature at or above the melting point of the polymer coating. In addition, many of the coatings currently require the use of a primer to aid in enhancing adhesion of the heat sealable coating to the film surface. Accordingly, there is a further need for a heat seal coating that provides a high heat seal strength at a low heat seal initiation temperature.

Additionally, it is increasingly important that greater use be made of materials that are biodegradable and to increase "bio-based content" or "bio-renewable content" in the coatings.

Biodegradable polymers are of industrial interest as replacements or supplements for petroleum-based polymers in a wide range of applications and particularly for packaging applications. One class of biodegradable polymers is polyhydroxyalkanoate (PHA), which is linear, aliphatic polyester that can be produced by numerous microorganisms for use as intracellular storage material. Articles made from the polymers are generally recognized by soil microbes as a food source. There has therefore been a great deal of interest in the commercial development of these polymers, particularly for disposable consumer items. The polymers exhibit good biodegradability and useful physical properties. For Example:

US 6,878,758 discloses methodology to prepare biocompatible, biodegradable polyhydroxyalkanoate compositions with controlled degradation rates.

US 7,781,539 discloses blends containing two or more polyhydroxyalkanoates.

US 8,703,449 describes a methodology to produce a glycolic acid-containing polyhydroxyalkanoate copolymer.

US 9,650,513 discloses a composition containing a blend of poly (butylene succinate) (PBS) or a polybutylene succinate adipate (PBSA), and a polyhydroxyalkanoate (PHA). WO2019/094805A1 relates to water-based polymer coatings for surface treatment of cellulose-based substrates.

Citation or identification of any document in this application is not an admission that such represents prior art to the present invention.

There remains a need for water-based barrier coatings which provide the same performance as the LDPE currently used for manufacturing paper containers, i.e., a coating with excellent sealing properties, e.g., heat sealing, ultrasonic sealing, etc, excellent barrier properties, more bio-based and bio-degradable content, avoids heavy metals, and which can be easily repulped and recycled.

### SUMMARY OF THE INVENTION

The invention is defined by the appended claims. The present invention fills this need by providing a heat-sealable, water-borne barrier coating composition, comprising
(a) 5-50wt%, based on the total weight of the composition, of one or more water-dispersible resins, wherein the one or more water-dispersible resins have an acid number (AN) between 50 and 500;
(b) 0-30wt%, based on the total weight of the composition, of one or more co-resins, wherein the one or more co-resins have a glass transition temperature (Tg) between 50 and 150°C and/or a melting temperature (Tₘ) between 50 and 150°C;
(c) 1-30wt%, based on the total weight of the composition, of one or more melting waxes wherein at least one of the waxes has a melting point at or below 100°C, for example from 40 to 100°C; and
(d) 10-90wt%, based on the total weight of the composition, water;
wherein the composition is free or essentially free of styrene, and contains equal to or greater than 20wt% bio-based material, based on the total weight of the composition, and wherein at least one of the one or more water dispersible resins, the one or more co-resins or one or more melting waxes are biodegradable; wherein the one or more water dispersible resins comprise one or more of polyacrylic, ethylene-acrylic acid copolymer (EAA), ethylene-vinyl alcohol (EVA), polyester or polyurethane, and mixtures and co-polymers thereof.

In many embodiments, the composition comprises 1-30wt% of the one or more co-resins,

In some embodiments, one or more of the waxes is biodegradable and/or contains 1wt% or more bio-based carbon. In many embodiments the at least one of the waxes of the invention is in the form of a wax/ethylene-acrylic acid copolymer dispersion. In a particular embodiment the wax/ethylene-acrylic acid copolymer dispersion comprises carnauba wax.

In some embodiments the one or more dispersible resin and/or one or more co-resin is biodegradable and/or contains 1wt% or more bio-based carbon. In many embodiments, the one or more dispersible resin and/or one or more co-resin is a polymer or copolymer derived from one or more monomers, which monomers contain bio-based carbon. For example, the one or more monomers containing bio-based carbon comprise acrylate, acrylic acid, alcohol, polyol, amine, polyamine, carboxylic acid, polycarboxyl acid, vinyl alcohol, vinyl acetate, hydroxy amine, isocyanate or polyisocyanate moieties.

When applied to a cellulosic substrate, the resulting coated substrate exhibits good water resistance; improved heat sealability; reduced blocking; excellent repulpability and recyclability; direct food contact compliance; and enhanced bio-based content relative to cellulosic packaging materials of the art.

### DESCRIPTION OF THE INVENTION

The present invention provides a heat-sealable, water-borne barrier coating composition, which contains at least 20wt%, based on the total weight of the composition, bio-based material, essentially no styrene and essentially no heavy metals. Also provided is a method of preparing a printed article, comprising depositing the composition of the invention onto a substrate, typically a cellulosic substrate, and curing the composition, a printed or coated article comprising a substrate and the composition of the invention, for example, cellulosic substrate upon which the composition of the invention has been applied. In a particular embodiment the article is a food packaging article.

Examples of advantageous performance properties include improved water resistance; improved heat sealability; reduced blocking; repulpability; recyclability; direct food contact compliance; styrene-free; and higher bio-based content.

The invention enables replacing polyethylene liners with cellulose-based substrates, which would be suitable for recycling. Compared to many existing products, the present invention contains no styrene and avoids Prop 65 labelling. It also reduces the carbon footprint by using bio-based materials. The hot air sealing of the present invention is superior, which makes it particularly suitable for the paper cup application.

It is to be understood that the foregoing general description and the following detailed description are exemplary and explanatory only, and are not restrictive of any subject matter claimed.

Headings are used solely for organizational purposes, and are not intended to limit the invention in any way.

Unless otherwise defined, all technical and scientific terms used herein have the same meaning as is commonly understood by one of skill in the art to which the inventions belong. Although any methods and materials similar or equivalent to those described herein can be used in the practice or testing of the present invention, the preferred methods are described.

### Definitions

As used herein, the term "styrene" encompasses free molecular styrene, styrene homologues, styrene derivatives, and styrene or styrene residues as part of a monomeric unit of an oligomer, polymer or copolymer. As used herein, each of "styrene-free", "essentially styrene-free", "free of styrene" and "essentially free of styrene", means that there is little to no free molecular styrene, styrene homologues, or styrene derivatives, and little to no styrene or styrene residues present as part of a monomeric unit of a polymer or copolymer. For example, in the present invention, the combined amount of "styrene" present in the coating composition as styrene, styrene homologues, styrene derivatives, or styrenic residue in an oligomer, polymer or co-polymer is 0 to 5wt%, often 0 to 3wt%, 0 to 2wt% and in many embodiments, 0 to 1wt%, based on the total wt% of the coating composition, and some embodiments, e.g., food contact applications, the amount may be lower, e.g., 0 to 0.5wt%, 0 to 0.1 wt% or 0 to 0.01 %.

In this application, the use of the singular includes the plural unless specifically stated otherwise. As used herein, the singular forms "a," "an" and "the" are intended to include the plural forms as well, unless the context clearly indicates otherwise.

In this application, the use of "or" means "and/or" unless stated otherwise.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

The claim term set off with the phrase "consist of", "consists of" and/or "consisting of" is limited to the elements recited immediately following "consist of", "consists of" and/or "consisting of", and is closed to unrecited elements related to that particular claim term. The term 'combinations thereof', when included in the listing of the recited elements that follow "consist of", "consists of" and/or "consisting of" means a combination of only two or more of the elements recited.

As used herein, "substrate" means any surface or object to which an ink or coating can be applied. Substrates include, but are not limited to, paper, fabric, leather, textiles, felt, concrete, masonry, stone, plastic, plastic or polymer film, glass, ceramic, metal, wood, composites, combinations thereof, and the like. Substrates may have one or more layers of metals or metal oxides, or other inorganic materials.

As used herein "article" or "articles" means a substrate or product of manufacture. Examples of articles include, but are not limited to: substrates such as paper, fabric, leather, textiles, felt, concrete, masonry, stone, plastic, plastic or polymer film, glass, ceramic, metal, wood, composites, and the like; and products of manufacture such as publications (e.g. brochures), labels, and packaging materials (e.g. cardboard sheet or corrugated board), containers (e.g. bottles, cans), clothing, a polyolefin (e.g. polyethylene or polypropylene), a polyester (e.g. polyethylene terephthalate), a metalized foil (e.g. laminated aluminum foil), metalized polyester, a metal container, and the like.

As used herein, the terms "inks and/or coatings," "inks and coatings," "inks or coatings," "inks," and "coatings" are used interchangeably.

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended. It is to be understood that wherein a numerical range is recited, it includes the end points, all values within that range, and all narrower ranges within that range, whether specifically recited or not.

As used herein, compostability is the property whereby a material is 1) biodegradable, i.e., it has an inherent tendency to be consumed by microorganisms, 2) subject to disintegration, i.e., the material physically breaks down during aging while exposed to certain environmental conditions, and 3) not ecotoxic, i.e., does not show signs of any inhibition on plant growth, or the survival of soil or aquatic fauna, after composting.

As used herein, bio-based carbon means that carbon present in carbon containing materials originates from recently living sources (naturally derived materials) as opposed to materials originating from ancient carbon such as petroleum and coal.

"Bio-based content" or "bio-renewable content" indicates the percentage of carbon from "natural" (plant or animal by-product) sources versus "synthetic" (petrochemical) sources. For reference, 100% Bio-based Carbon indicates that a material is entirely sourced from plants or animal by-products and 0% Bio-based Carbon indicates that a material did not contain any carbon from plants or animal by-products. A value in between represents a mixture of natural and fossil sources.

Bio-based content: ASTM D6866-04 is used to measure the bio-based carbon content (as a fraction of total organic carbon) using the radiocarbon isotope (also known as Carbon-14, C¹⁴ or ¹⁴C), a naturally occurring isotope of carbon that is radioactive and decays in such a way that there is none left after about 45,000 years following the death of a plant or animal. Its most common use is radiocarbon dating by archaeologists. An industrial application was also developed to determine if consumer products and CO₂ emissions were sourced from plants/biomass or from materials such as petroleum or coal (fossil-based).

The Bio-based content values reported in Table 3 are based on compositional calculations from the Bio-based content values of the individual raw materials. The Bio-based content of the raw materials were measured at an external lab (Beta Analytic, Miami, FL). This test is called "bio-based content testing" per ASTM D6866.

Throughout this disclosure, all parts and percentages are by weight (wt% or mass% based on the total weight) and all temperatures are in °C unless otherwise indicated.

### Compositions and uses thereof

The present invention provides a water-based coating compositions comprising
(a) 5-50wt%, optionally 5-40 wt%, based on the total weight of the composition, of one or more water-dispersible resins, with acid number (AN) of 50-500, optionally 60-300, optionally 70-200;
(b) 0-30wt% based on the total weight of the composition, of one or more co-resins, having either a glass transition temperature (T_{g}) of 50-150°C, a melting temperature (Tₘ) of 50-150°C, or both;
(c) 1-30 wt%, optionally 5 to 30wt%, 10 to 30wt% or 15 to 25 wt%, based on the total weight of the composition, of one or more melting waxes wherein at least one of the waxes has a melting point at or below 100°C; and
(d) 10-90wt%, based on the total weight of the composition, water,
wherein the composition is essentially free of styrene, and wherein the composition, when dried, comprises at least 20% bio-based carbon content; all the resins are free of styrene monomer, and wherein at least one of the one or more water dispersible resins, the one or more co-resins or one or more melting waxes are biodegradable . The one or more water dispersible resins comprise one or more of polyacrylic, ethylene-acrylic acid copolymer (EAA), ethylene-vinyl alcohol (EVA), polyester or polyurethane, and mixtures and co-polymers thereof.

Any of the resins or waxes of the invention may comprise bio-based or biodegradable material, but not all of the materials need to as long as the composition contains at least 20% bio-based carbon content. It is therefore possible for a resin of the invention to be petroleum-based, as long as it is styrene-free. Examples of styrene-free petroleum-based polymers include, but are not limited to acrylics, ethylene-acrylic acid copolymer (EAA), ethylene-vinyl alcohol (EVA), polyester, polyurethane, and mixtures and co-polymers thereof. In some embodiments, the styrene-free petroleum-based polymer has an acrylic acid content of 5wt% to 35wt%, based on the weight of monomers incorporated into the copolymer.

The one or more dispersible resins comprise one or more of polyacrylic, ethylene-acrylic acid copolymer (EAA), ethylene-vinyl alcohol (EVA), polyester or polyurethane, and mixtures and co-polymers thereof, for example polyacrylic, ethylene-acrylic acid copolymer (EAA), ethylene-vinyl alcohol (EVA).

Further, it has become possible to obtain or prepare resins, traditionally thought of as "petroleum based", which contain bio-based materials. For example, diacids, for use in polyamide, polyesters, etc., have been obtained from the fatty acid esters in vegetable matter, and methods have been developed for manufacturing acrylic monomers with bio-based content, which can replace acrylic acid or acrylic esters in polymer synthesis, e.g., ethylene-acrylic acid copolymer (EAA).

Biodegradable polymers of the invention may be any of the known classes of biodegradable polymers, and may be a water-dispersible resin or a co-resin. For example, the biodegradable polymer may comprise a biodegradable polyester. In other embodiments, the biodegradable polymers may be selected from the group consisting of polylactic acid (PLA), polycaprolactone (PCL), polymalate (PMA), polyesteramide (PEA), polyhydroxyalkanoate (PHA), polyhydroxyvalerate (PHV), polyhydroxybutyrate-co-hydroxyvalerate (PHBV), polyhydroxyhexanoate (PHH), polybutylene succinate (PBS), polybutylene succinate-co-butylene adipate (PBSA), polybutylene adipate-co-terephthalate (PBAT), polyethylene furanoate (PEF), polyvinyl alcohol (PVA), polyglycolic acid, aliphatic polyaspartic polyurea, soybean polymer, and mixtures and co-polymers thereof. In some embodiments, the biodegradable polymer is semi-crystalline and has a melting point (Tm) of 50°C to 150°C.

Some care should be taken in selecting a polymer, such as a bio-sourced polymer, for use in the invention. For example, Diaz, Carlos A, Sungyoung Kim, and Hsun Yi Pao. "Film Performance of Poly(lactic acid) Blends for Packaging Applications." Journal of Applied Packaging Research 8. 3 (2016): 43-51. Web. *; discloses that while Poly(lactic acid) (PLA), a biodegradable thermoplastic derived from renewable resources stands out as a substitute to petroleum-based plastics, use of PLA based films for food packaging been limited because PLA is more brittle than traditional oil-based plastic and PLA films display low tear resistance, low impact resistance, and low heat seal strength. Blending PLA with other polymers, such as, ethylene vinyl acetate, polyhydroxyalkanoate or polycaprolactone, can help overcome these weaknesses, so with the proper formulation, PLA can find use in the present invention.

The wax may be in a powder form or in an aqueous dispersion thereof. Suitable waxes that can be used in the compositions include, but are not limited to, polyethylene (PE), polypropylene (PP), EAA, EVA, PHBV, paraffin, polytetrafluoroethylene, amide, carnauba, rice bran, hydrogenated soybean oil waxes, and mixtures thereof.

In many embodiments, the wax is a biodegradable material comprising bio-based carbon.

In many embodiments, the compositions contain both the water-dispersible resin and a co-resin. The co-resin can, among other things, provide flexibility in formulating the composition. For example, as shown in the data tables, inventive examples 1, 2, and 4 performed well in tests for Water Absorption, Hot Air Seal, Heated Jaw Seal, Block resistance, and Oil/Grease Resistance. Inventive example 4 did not contain a co-resin and had relatively high viscosity. Whereas inventive examples 1 and 2, which contained the styrene-free acrylic dispersion Alberdingk AC 4650, showed equally good performance but had much lower viscosity.

In some embodiments, a cross-linking agent such as ammonium zinc carbonate, ammonium zirconium carbonate, and mixtures thereof can be included in the coatings described herein. The inclusion of the cross-linking agent may further improve or enhance the resistance properties of the coatings and may improve resistance when the coatings and/or articles coated with same are exposed to high temperature conditions. The amount of cross-linking agent included in the coatings may be, based on the total weight of the coating, about 0wt% to about 15wt%. Higher amounts may compromise the recyclability and repulpability of the paper. Suitable cross-linking agents include Zinc Oxide solution #1 (ammonium zinc carbonate solution, available from BASF) and Bacote 20 (ammonium zirconium carbonate solution, available from MEL Chemicals).

Any known and conventional filler material may be included in the coatings described herein. Suitable fillers include, for example, talc, clay, alumina, silica, titanium dioxide, sodium hexametaphosphate, calcium carbonate and mixtures thereof. Other materials may be used. In one aspect, the amount of filler materials present may be, based on the total weight of the coating, about 0wt% to about 30wt%.

Additives that may be present in the coatings described herein, include, for example, defoamers, wetting agents, leveling agents, colloidal stabilizers, rheology modifiers, biocides, pesticides, surfactants, adhesion promoters, silicones, light stabilizers, de-gassing additives, ammonia, flow promoters, antioxidants, stabilizers, dispersants, plasticizers, rheological additives, and others, and combinations thereof. In addition, other additives can be added to the coatings of the present invention to enhance the usefulness of the coatings, or the coatings produced by curing the coatings. For example, plasticizers, antimicrobials, coloring agents, optical brighteners, ultraviolet absorbers, antioxidant, and the like can be incorporated into the coatings of the present invention, if desired. The amount of additives that may be included in the coatings may be, based on the total weight of the coating, about 0wt% to about 5wt%.

Water miscible organic solvents may be included in the coating compositions. If so, they would preferably be present in amounts of about 0.1wt% to about 10wt%, based on the total weight of the composition. Examples of organic solvents include, but are not limited to, ethanol, isopropanol, N-propanol, glycols, glycol ethers and the like.

Colorants may be included in the coatings described herein. Suitable colorants include, but are not limited to, organic or inorganic pigments and dyes known to the person of ordinary skill in the art. Care must always be taken when selecting colorants for food contact materials. The direct food contact compliance of the colorant as well as the risk of migration into the food must be considered. When safe, pigments can be used in amounts up to 20 wt%, but more generally less than 5 wt%, and often less than 2 wt% are added. Dyes are typically added at much lower amounts than pigments. Very small amounts, less than 1 wt%, of pigment or dyes may be used to neutralize the color and improve the appearance of the coating. Additionally, the pigments/dyes may be selected such as that emit a fluorescence signal when excited by an external light source such as a UV or NIR lamp, and become either visible to the naked eye or detectable using photodetector or imaging equipment, e.g., to verify that a coating has been applied uniformly on a substrate. Suitable dyes include, for example, fluorescent dyes, azo dyes, anthraquinone dyes, xanthene dyes, azine dyes, and combinations thereof. Organic pigments may be one pigment or a combination of pigments, such as for instance Pigment Yellow Numbers 12, 13, 14, 17, 74, 83, 114, 126, 127, 174, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36; Pigment Blue Numbers 15, 15:3, 15:4; Pigment Violet Numbers 3, 23, 27; and/or Pigment Green Number 7.

Suitable inorganic pigments that may be included in the coatings are, for example: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the desired colors.

The compositions of the present invention contain essentially no styrene or methyl styrene monomer, oligomer, homopolymer or copolymer. The water-based coating contains at least 20% bio-based carbon content, has good barrier properties, and is preferably appropriate for direct food contact. The present invention also provides coated substrates comprising cellulose-substrates with water-based polymer coatings of the present invention, and further provides, for example, paper cups comprising the coated substrates. Often, in uses such as these, the water-based coatings have a dry coat weight of 1 g/m² to 40 g/m². Methods of making the paper cups and coated substrates are also disclosed herein.

The invention enables the replacement of polyethylene liners with cellulose-based substrates suitable for recycling. Compared to many existing products, the present invention contains little to no styrene and avoids Prop 65 labelling. It also reduces the carbon footprint by using bio-based materials. The hot air sealing of the present invention is superior, which makes it particularly suitable for the paper cup application.

The coatings described herein are typically safe for contacting food and sensitive materials, and thus are applied to substrate materials formed into packaging for food and other sensitive materials. In one aspect, the coatings (1) do not contain toxic and/or harmful components; (2) do not contain components that can migrate into the food or sensitive materials above the safety level, or (3) both. In one inventive aspect, the coatings are compliant with government or trade association rules and regulations governing contact with food or other sensitive materials, such as the pertinent regulatory rules of the United States Food and Drug Administration ("FDA"), the Bundesinstitut für Risikobewertung ("BfR") (translated as "German Federal Institute for Risk Assessment"), and the National Food Safety Standard of the People's Republic of China ("GB").

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods and materials are described.

### EXAMPLES

The invention is further described by the following non-limiting examples which further illustrate the invention, and are not intended, nor should they be interpreted to, limit the scope of the invention.

### Test Methods

**Solid** content of the inventive and comparative coatings was determined based on the weight difference of an applied coating before and after evaporating water and other volatile material. Evaporation was effected by heating one gram of the coating at 150°C for 30 minutes.

**Viscosity** was measured by a Brookfield DV-2T viscometer with spindle LV-2(62) at 30 rpm, at approximately 25°C.

**Water** absorption: One indicator of the effectiveness of the liquid barrier properties of a coating composition is how much liquid a coated substrate will absorb in a specified amount of time. TAPPI T 441 test method was employed to measure the water absorptiveness of the coated substrate by a Cobb Sizing Tester (Testing Machines, Inc., Model 61-04). The water absorptiveness (Cobb value) is defined as the mass of water absorbed in a specific time by 1 m² of paper, board, or corrugated fiberboard under 1 cm of water. The standard test time is a period of 30 min. For liquid packaging applications a Cobb value ≤ 20 g/m² is considered a passing result; more preferred is ≤ 10 g/m², most preferred, though not required, is ≤ 5 g/m².

**Oil** and grease resistance: The TAPPI T559 test method (i.e. the kit test) was employed to measure the grease and oil resistance of the coatings. A drop of a mixture of castor oil, heptane, and toluene was released onto the coated substrate, and then observed for 15 seconds to determine whether the coated substrate had darkened. Twelve different mixtures were applied. Based on the aggressiveness of the mixtures, the mixtures were numbered 1 to 12 ("kit level"). The mixture 12 was the most aggressive, and mixture 1 was the least aggressive. The less castor oil in the mixture, the more aggressive the mixture. Failure is indicated by the darkening or discoloring of the coated substrate, which occurs when at least a portion of the test mixture is absorbed by the substrate. The sample kit level score is the highest numbered mixture applied without failure. A passing result is a kit level score ≥ 5, more preferably ≥ 6.

**Heated** jaw sealing: Heat sealing performance was evaluated using a Sencorp model 12-AS/1 sealer. Coated articles were placed either face-to-face (AA) or face-to-back (AB) and sealed at temperatures which increased from 110-200°C at 10°C intervals under constant pressure (88 psi) and dwell time (1 second). "Face" or "A" refers to the side of the substrate to which the ink or coating is printed or applied. "Back" or "B" refers to the unprinted side of the substrate. After sealing and cooling to room temperature, an Instron tensiometer (Model 3342) was used to measure the force required to break the 1-inch-wide heat-sealed sample at a pulling speed of 10 inch/min. When the heat seal is pulled apart, it can be a result of paper tear, cohesion failure (coating-coating delamination) or adhesion failure (coating-substrate delamination). Ideally, the paper substrate will tear before the heat seal is pulled apart. The seal window is identified as minimum temperature required to give 100% paper tear. A preferred result is ≤ 200°C.

**Hot Air** Sealing - Heated jaw sealing is a thermal conduction process, while hot air sealing is a thermal convection process. State-of-the-art forming machines, such as the highspeed PMC 1003, use hot air to seal paperboard cups. Hot air sealing equipment was used to compare the hot air sealing among different samples at a sample size of 105 mm X 155 mm. Coated articles were placed face-to-face (AA) or face-to-back (AB) and sealed at various temperatures from 200-550°C for 1.24 seconds under 400 Newtons of pressure for 1.9 seconds. The samples are considered heat sealable by hot air if they achieve 100% paper tear within a similar range to LDPE (AA: below 300°C) without burning.

**Roll block** resistance: Coated substrates are often stored in stacks or rolls prior to use. It is desirable that the layers of substrate do not stick together under such conditions. Block resistance is the property of a coating correlated with the ability of a coating layer to not stick to other layers of the substrate. In the case of block resistance, it is desirable that the layers can be pulled apart before the substrate tears. Thus, a smaller force necessary to apply before the layers pull apart is desired. Roll block resistance was evaluated by placing the sample either face-to-face (AA) or face-to-back (AB) in a Carver press at 90°F and 2,000 psi (13789.5 kPa) for 2 hours. An Instron tensiometer (Model 3342) was then used to measure the force required to break the 1-inch-wide sample at a pulling speed of 10 inch/min (25.4 cm/min). The results are expressed in gf/in (1 gf/in = 0.386 N/m). Values ≤ 100 gf/in do not show any paper tear and are acceptable; more preferred is ≤ 50 gf/in.

**Bio-based** content: ASTM D6866-04 was used to measure the bio-based carbon content (as a fraction of total organic carbon) using the radiocarbon isotope ¹⁴C, a naturally occurring isotope of carbon that is radioactive and decays in such a way that there is none left after about 45,000 years following the death of a plant or animal. Its most common use is radiocarbon dating by archaeologists. An industrial application was also developed to determine if consumer products and CO₂ emissions were sourced from plants/biomass or from materials such as petroleum or coal (fossil-based).

### Test compositions

**Coating compositions** for testing were prepared from materials in Table 1:

**Table 1. List of Preferred Raw Materials**

| **Material** | **Description** | **Supplier** | **Solids** | **Tg** | **Tm** | **AN** |
|---|---|---|---|---|---|---|
| ¹Neocryl A 2092 | Styrene-acrylic dispersion | DSM | ~47% | 11°C | N/A | 57 |
| ²Rhobarr 110 | Styrene-free acrylic dispersion | Dow | ~50% | 7°C | N/A | 1 |
| ¹PRIMACOR 5980I | EAA resin | SK Global Chemical | 100% | N/A | 77°C | 156 |
| ²Alberdingk AC 4650 | Styrene-free acrylic dispersion | Alberdingk Boley | ~50% | 52°C | N/A | N/A |
| Carnauba wax (T3 grade) | Carnauba wax | Gehring Montgomery, Inc. | 100% | N/A | 80-83°C | N/A |
| Surfynol DF-695 | Silicone defoamer | Evonik | 100% | N/A | N/A | N/A |
| Omyacarb F | Calcium carbonate filler | Omya | 100% | N/A | N/A | N/A |
| SynthroPel-WA 491 | Styrene-acrylic/paraffin wax dispersion | Synthron | ~41% | 27°C | 51°C | N/A |
| HydroPalat WE 3475 | Wetting agent | BASF | ~75% | N/A | N/A | N/A |
| Rheovis AS 1127 | Thickener | BASF | ~40% | N/A | N/A | N/A |
| Pluronic L 61 | Surfactant | BASF | 100% | N/A | N/A | N/A |
| Proxel GXL | Biocide | Lonza | ~20% | N/A | N/A | N/A |

| | | | | | | |
|---|---|---|---|---|---|---|
| ¹Water dispersible resin ²Co-resin | | | | | | |

### Procedures for making coating examples:

The Inventive and Comparative Examples below were prepared using the materials and proportions found in **Table 2** below.

### Inventive Example 1 was prepared in a two-step process:

Step 1: PRIMACOR 5980I (ethylene acrylic acid resin, 20% acrylic acid monomer), CARNAUBA wax, and water were introduced into a mixing vessel and slowly heated to 90°C, at which temperature 7.5 g NH₄OH aqueous solution (28-30%) was added followed by the addition of 1.3 g Pluronic L 61, after which stirring continued for 1 hour at 90°C until all the resins were dissolved to form a stable dispersion.

Step 2: 89.95 parts of the product from step 1 was blended with 10.0 parts of Alberdingk AC 4650 (Styrene-free acrylic dispersion, 50% solids) and 0.05 parts of Proxel GXL to yield the coating of Inventive Example 1.

**Inventive Example 2** was prepared from the materials and proportions found in Table 2, following the general two-step procedure of Inventive Example 1, except that in Step 2, 89.95 parts of the product from Step 1 was blended with **20.0 parts** of Alberdingk AC 4650 and 0.05 parts of Proxel GXL.

**Inventive Example 4** was prepared in a single step process from the materials and proportions found in Table2:

PRIMACOR 5980I, CARNAUBA wax, and water were introduced into a mixing vessel and slowly heated to 90°C, at which temperature 7.5 g NH₄OH aqueous solution (28-30%) was charged added followed by the addition of 1.3 g PLURONIC L 61, after which stirring continued for 1 hour at 90°C until all the resins are dissolved to form a stable dispersion.

**Comparative Example 1** was prepared from the materials found in Table 2 in a single step process following the general procedure of Inventive Example 4.

**Comparative Example 2** was prepared from the materials found in Table 2 in a single step process following the general procedure of Inventive Example 4.

**Comparative Example 3** was prepared from the materials found in Table 2 following the general two-step procedure of Inventive Example 1, except that in Step 2, 89.95 parts of the product from Step 1 was blended with **10.0 parts of Rhobarr 110** and 0.05 parts of Proxel GXL.

**Table 2. Coating Formulations**

| **Material** | **Comp. Ex. 1** | **Comp. Ex. 2** | **Comp. Ex. 3** | **Inv. Ex. 1** | **Inv. Ex. 2** | **Inv. Ex. 4** |
|---|---|---|---|---|---|---|
| Neocryl A 2092 | 79.10 | | | | | |
| Rhobarr 110 | | 94.40 | 10.00 | | | |
| PRIMACOR 5980I | | | 19.70 | 19.70 | 17.50 | 17.30 |
| Alberdingk AC 4650 | | | | 10.00 | 20.00 | |
| Carnauba wax (T3) | | | 9.90 | 9.90 | 8.80 | 17.30 |
| Surfynol DF-695 | 0.30 | | | | | |
| Omyacarb F-FL | 5.00 | 5.00 | | | | |
| SynthroPel-WA 491 | 14.95 | | | | | |
| Ammonium Hydroxide (NH₄OH) | | | 2.50 | 2.50 | 2.24 | 2.20 |
| Pluronic L 61 | | | 0.45 | 0.45 | 0.40 | 0.50 |
| HydroPalat WE 3475 | 0.50 | 0.50 | | | | |
| Proxel GXL | 0.05 | | 0.05 | 0.05 | 0.05 | |
| Rheovis AS 1127 | 0.10 | 0.10 | | | | |
| Water | | | 57.40 | 57.40 | 51.01 | 62.70 |
| Total | 100.00 | 100.00 | 100.00 | 100.00 | 100.00 | 100.00 |

### Preparation of coated test samples

Viscosity of the test samples was measured by a Brookfield DV-2T viscometer with spindle LV-2(62) at 30 rpm, at approximately 25°C. Solids content was determine as described above.

The Fortress^{™} PE Folding Carton Board used to prepare the test samples is a double clay coated SBS board with an added extrusion coating of polyethylene on one.

Each of the above coatings were applied to the side of a 12pt IP Fortress^{™} PE Folding Carton Board not coated with polyethylene using a RK K101 Control Coater (K-Bar #2, 2 passes) for comparison purposes. (Of course, this does not exclude them from being applied to other paper or board substrates by other methods.) It is expected to be within the abilities of one of ordinary skill in the art to adjust the formulations for viscosity, rheology, etc., to make them suitable for application by other methods (e.g., flexographic printing, gravure printing, blade coating, curtain coating, rod/bar coating).

After application, the coatings were dried at 60°C for 2 min prior to any testing.

### Test results.

The coated substrates were tested as described above. Results are shown in Table 3.

**Table 3. Test Results**

| **Coating** | **Water Absorption [30 min Cobb (g/m²)]** | **Hot Air Seal AA** | **Heated Jaw Seal AB** | **Block AA (gf/in)** | **Solids (%)** | **Viscosity (cP)** | **% Bio-based content*** | **Oil/Grease Resistance (Kit Level)** |
|---|---|---|---|---|---|---|---|---|
| LDPE | 0-2 | Pass | >200°C | 0.0 | N/A | N/A | 0 | 12 |
| Comp. Ex. 1 | 5-7 | Fail | 180°C | 38.8 | 48-50 | 300-500 | 0 | 12 |
| Comp. Ex. 2 | 6-8 | Fail | 160°C | 453.8 | 49-52 | 345 | 0 | 12 |
| Comp. Ex. 3 | 2-4 | Pass | 150°C | 115.2 | 35-40 | 309 | 30 | 8 |
| Inv. Ex. 1 | 3-5 | Pass | 150°C | 35.7 | 38-43 | 275 | 30 | 8 |
| Inv. Ex. 2 | 3-5 | Pass | 150°C | 0.0 | 36-38 | 114 | 30 | 12 |
| Inv. Ex. 4 | 6-8 | Pass | 160°C | 0.0 | 33-37 | 1,000-1,300 | 30 | 12 |

| | | | | | | | | |
|---|---|---|---|---|---|---|---|---|
| *Based on dry film weight. | | | | | | | | |

As shown in Table 3, LDPE and all the examples showed good water resistance (30 min Cobb < 10 g/m²). However, comparative examples 1 and 2 failed the hot air sealing test, despite performing well on the heated jaw seal. Although comparative example 3 passes the hot air sealing and the heated jaw seal, its roll block is above 100 gf/in along with comparative example 2. On the other hand, inventive examples 1, 2 & 4 showed comparable or better sealing properties to LDPE, while maintaining a low roll block. Inventive examples 1, 2 & 4 are also more beneficial due to their higher bio-based content.

## Claims

1. A water-borne barrier coating composition, comprising
(a) 5-50wt%, based on the total weight of the composition, of one or more water-dispersible resins, wherein the one or more water-dispersible resins have an acid number (AN) between 50 and 500;
(b) 0-30wt%, based on the total weight of the composition, of one or more co-resins, wherein the one or more co-resins have a glass transition temperature (T_{g}) between 50 and 150°C and/or a melting temperature (Tₘ) between 50 and 150°C;
(c) 1-30wt%, based on the total weight of the composition, of one or more melting waxes wherein at least one of the waxes has a melting point at or below 100°C; and
(d) 10-90wt%, based on the total weight of the composition, water;
wherein the composition is essentially free of styrene and contains equal to, or greater than, 20wt% bio-based components, based on the total weight of the composition, and wherein at least one of the one or more water dispersible resins, the one or more co-resins or one or more melting waxes are biodegradable;
wherein the one or more water dispersible resins comprise one or more of polyacrylic, ethylene-acrylic acid copolymer (EAA), ethylene-vinyl alcohol (EVA), polyester or polyurethane, and mixtures and co-polymers thereof;
wherein the bio-based content is measured according to ASTM D6866-04.

2. The composition of claim 1:
(i) wherein the melting wax has a melting point between 40 and 100°C;
(ii) wherein one or more dispersible resin, one or more co-resin, and/or one or more melting wax contains bio-based carbon; or
(iii) wherein the one or more waxes are selected from the group consisting of polyethylene (PE), polypropylene (PP), EAA, EVA, PHBV, paraffin, polytetrafluoroethylene, amide, carnauba, rice bran, hydrogenated soybean oil waxes, and mixtures thereof.

3. The composition of claim 1:
(i) wherein one or more of the waxes is biodegradable; or
(ii) wherein one or more of the waxes contains 1wt% or more bio-based carbon.

4. The composition of claim 1 wherein one or more dispersible resin and/or one or more co-resin contains 1wt% or more bio-based carbon.

5. The composition of claim 4 wherein one or more dispersible resin and/or one or more co-resin is a polymer or copolymer derived from one or more monomers containing bio-based carbon optionally wherein the one or more monomers containing bio-based carbon comprise acrylate, acrylic acid, alcohol, polyol, amine, polyamine, carboxylic acid, polycarboxyl acid, vinyl alcohol, vinyl acetate, hydroxy amine, isocyanate or polyisocyanate moieties.

6. The composition of claim 1:
(i) wherein one or more co-resin comprises one or more polyacrylic, ethylene-acrylic acid copolymer (EAA), ethylene-vinyl alcohol (EVA), polyester or polyurethane, and mixtures and co-polymers thereof;
(ii) comprising 1-30wt%, based on the total weight of the composition, of the one or more co-resins; or
(iii) wherein one or more dispersible resin and/or one or more co-resin is biodegradable; optionally wherein one or more of the dispersible resins or co-resins are selected from the group consisting of polyester, polylactic acid (PLA), polycaprolactone (PCL), polymalate (PMA), polyesteramide (PEA), polyhydroxyalkanoate (PHA), polyhydroxyvalerate (PHV), polyhydroxybutyrate-co-hydroxyvalerate (PHBV), polyhydroxyhexanoate (PHH), polybutylene succinate (PBS), polybutylene succinate-co-butylene adipate (PBSA), polybutylene adipate-co-terephthalate (PBAT), polyethylene furanoate (PEF), polyvinyl alcohol (PVA), polyglycolic acid, aliphatic polyaspartic polyurea, soybean polymer, and mixtures and co-polymers thereof.

7. The composition of claim 1, wherein at least one of the waxes is in the form of a wax/ethylene-acrylic acid copolymer dispersion;
optionally wherein the wax/ethylene-acrylic acid copolymer dispersion comprises carnauba wax.

8. The composition of claim 1:
(i) further comprising a crosslinking agent selected from the group consisting of ammonium zinc carbonate, ammonium zirconium carbonate, and combinations thereof;
(ii) further comprising one or more organic solvents selected from the group consisting of ethanol, isopropanol, N-propanol, glycols and glycol ethers; or
(iii) wherein the composition is repulpable and compostable and essentially free of heavy metals.

9. The composition of claim 1, which when cured provides a cured coating that forms a hot air seal when placed face-to-face (AA) or face-to-back (AB) and sealed at various temperatures from 200-550°C for 1.24 seconds under 400 Newtons of pressure for 1.9 seconds, which seal passes a hot air seal test, achieving 100% paper tear within a similar range to LDPE (AA: below 300°C) without burning;
optionally wherein the cured coating also exhibits a 30-min Cobb value of less than 10 gsm, roll block resistance of < 100gF/in and a kit value of at least 8.

10. The composition of claim 1, further comprising one or more additives selected from the group consisting of fillers defoamers, wetting agents, leveling agents, colloidal stabilizers, rheology modifiers, biocides, pesticides, surfactants, adhesion promoters, silicones, light stabilizers, de-gassing additives, ammonia, flow promoters, antioxidants, stabilizers, dispersants, plasticizers, rheological additives, plasticizers, antimicrobials, colorants, optical brighteners, ultraviolet absorbers, antioxidants.

11. A printed or coated article comprising a substrate and the composition of claim 1.

12. The article of claim 11:
(i) wherein the substrate is cellulosic;
(ii) wherein the article is a food packaging article; or
(iii) wherein the food packaging article is a beverage cup or an ice-cream cup or tub.

13. A method of preparing a printed article, comprising depositing the composition of claim 1 onto a substrate and curing the composition.

14. The method of claim 13 further comprising the steps of forming and sealing the coating to assemble a food packaging article.

15. The method of claim 14, wherein the sealing process involves hot air sealing or ultrasonic sealing or wherein the food packaging article is a beverage cup or an ice-cream cup or tub.

## Patentansprüche

1. Barrierebeschichtungszusammensetzung auf Wasserbasis umfassend
(a) 5-50 Gew.-%, bezogen auf das Gesamtgewicht der Zusammensetzung, an einem oder mehreren wasserdispergierbaren Harzen, wobei das eine oder die mehreren wasserdispergierbaren Harze eine Säurezahl (AN) zwischen 50 und 500 aufweisen;
(b) 0-30 Gew.-%, bezogen auf das Gesamtgewicht der Zusammensetzung, an einem oder mehreren Coharzen, wobei das eine oder die mehreren Coharze eine Glasübergangstemperatur (T_{g}) zwischen 50 und 150 °C und/oder eine Schmelztemperatur (Tₘ) zwischen 50 und 150 °C aufweisen;
(c) 1-30 Gew.-%, bezogen auf das Gesamtgewicht der Zusammensetzung, an einem oder mehreren Schmelzwachsen, wobei wenigstens eines der Wachse einen Schmelzpunkt bei oder unter 100 °C aufweist; und
(d) 10-90 Gew.-%, bezogen auf das Gesamtgewicht der Zusammensetzung, Wasser;
wobei die Zusammensetzung im Wesentlichen frei von Styrol ist und gleich oder mehr als 20 Gew.-% Komponenten auf Biobasis, bezogen auf das Gesamtgewicht der Zusammensetzung, enthält und wobei wenigstens eines des einen oder der mehreren wasserdispergierbaren Harze, des einen oder der mehreren Coharze oder des einen oder der mehreren Schmelzwachse biologisch abbaubar ist;
wobei das eine oder die mehreren wasserdispergierbaren Harze eines oder mehrere von Polyacryl, Ethylen-Acrylsäure-Copolymer (EAA), Ethylen-Vinylalkohol (EVA), Polyester oder Polyurethan und Gemische und Copolymere davon umfassen;
wobei der Gehalt auf Biobasis nach ASTM D6866-04 gemessen wird.

2. Zusammensetzung nach Anspruch 1:
(i) wobei das Schmelzwachs einen Schmelzpunkt zwischen 40 und 100 °C aufweist;
(ii) wobei ein oder mehrere dispergierbare Harze, ein oder mehrere Coharze und/oder ein oder mehrere Schmelzwachse Kohlenstoff auf Biobasis enthalten; oder
(iii) wobei das eine oder die mehreren Wachse ausgewählt sind aus der Gruppe bestehend aus Polyethylen (PE), Polypropylen (PP), EAA, EVA, PHBV, Paraffin, Polytetrafluorethylen, Amid, Carnauba, Reiskleie, hydrierten Sojabohnenölwachsen und Gemischen davon.

3. Zusammensetzung nach Anspruch 1:
(i) wobei eines oder mehrere der Wachse biologisch abbaubar sind; oder
(ii) wobei eines oder mehrere der Wachse 1 Gew.-% oder mehr Kohlenstoff auf Biobasis enthalten.

4. Zusammensetzung nach Anspruch 1, wobei ein oder mehrere dispergierbare Harze und/oder ein oder mehrere Coharze 1 Gew.-% oder mehr Kohlenstoff auf Biobasis enthalten.

5. Zusammensetzung nach Anspruch 4, wobei ein oder mehrere dispergierbare Harze und/oder ein oder mehrere Coharze ein Polymer oder Copolymer abgeleitet von einem oder mehreren Monomeren, die Kohlenstoff auf Biobasis enthalten, sind, wobei das eine oder die mehreren Monomere, die Kohlenstoff auf Biobasis enthalten, gegebenenfalls Acrylat-, Acrylsäure-, Alkohol-, Polyol-, Amin-, Polyamin-, Carbonsäure-, Polycarbonsäure-, Vinylalkohol-, Vinylacetat-, Hydroxyamin-, Isocyanat- oder Polyisocyanateinheiten umfassen.

6. Zusammensetzung nach Anspruch 1:
(i) wobei ein oder mehrere Coharze ein oder mehrere Polyacryl, Ethylen-Acrylsäure-Copolymer (EAA), Ethylen-Vinylalkohol (EVA), Polyester oder Polyurethan und Gemische und Copolymere davon umfassen;
(ii) umfassend 1-30 Gew.-%, bezogen auf das Gesamtgewicht der Zusammensetzung, an dem einen oder den mehreren Coharzen; oder
(iii) wobei ein oder mehrere dispergierbare Harze und/oder ein oder mehrere Coharze biologisch abbaubar sind; wobei gegebenenfalls eines oder mehrere der dispergierbaren Harze oder Coharze ausgewählt sind aus der Gruppe bestehend aus Polyester, Polymilchsäure (PLA), Polycaprolacton (PCL), Polymalat (PMA), Polyesteramid (PEA), Polyhydroxyalkanoat (PHA), Polyhydroxyvalerat (PHV), Polyhydroxybutyrat-co-hydroxyvalerat (PHBV), Polyhydroxyhexanoat (PHH), Polybutylensuccinat (PBS), Polybutylensuccinat-co-butylenadipat (PBSA), Polybutylenadipat-co-terephthalat (PBAT), Polyethylenfuranoat (PEF), Polyvinylalkohol (PVA), Polyglycolsäure, aliphatischem Polyasparaginpolyharnstoff, Sojabohnenpolymer sowie Gemischen und Copolymeren davon.

7. Zusammensetzung nach Anspruch 1, wobei wenigstens eines der Wachse in der Form einer Wachs/Ethylen-Acrylsäure-Copolymer-Dispersion vorliegt; gegebenenfalls wobei die Wachs/Ethylen-Acrylsäure-Copolymer-Dispersion Carnaubawachs umfasst.

8. Zusammensetzung nach Anspruch 1:
(i) ferner umfassend ein Vernetzungsmittel ausgewählt aus der Gruppe bestehend aus Ammoniumzinkcarbonat, Ammoniumzirkoniumcarbonat und Kombinationen davon;
(ii) ferner umfassend ein oder mehrere organische Lösungsmittel ausgewählt aus der Gruppe bestehend aus Ethanol, Isopropanol, N-Propanol, Glycolen und Glycolethern; oder
(iii) wobei die Zusammensetzung repulpierbar und kompostierbar und im Wesentlichen frei von Schwermetallen ist.

9. Zusammensetzung nach Anspruch 1, die, wenn gehärtet, eine gehärtete Beschichtung bereitstellt, die eine Heißluftdichtung bildet, wenn Seite an Seite (AA) oder Seite an Rücken (ab) platziert und bei verschiedenen Temperaturen von 200-550 °C für 1,24 Sekunden unter 400 Newton Druck für 1,9 Sekunden gesiegelt, wobei die Dichtung eine Heißluftversiegelprüfung besteht und 100 % Papierriss in einem ähnlichen Bereich wie LDPE (AA: unter 300 °C) ohne Verbrennen erzielt;
wobei gegebenenfalls die gehärtete Beschichtung ferner einen 30-min-Cobb-Wert von weniger als 10 gsm, eine Rollblockfestigkeit von < 100 gF/in und einen Kit-Wert von wenigstens 8 aufweist.

10. Zusammensetzung nach Anspruch 1, ferner umfassend einen oder mehrere Zusatzstoffe ausgewählt aus der Gruppe bestehend aus Füllstoffen, Entschäumern, Netzmitteln, Verlaufmitteln, kolloidalen Stabilisatoren, Rheologiemodifikatoren, Bioziden, Pestiziden, Tensiden, Haftvermittlern, Siliconen, Lichtschutzmitteln, Entgasungszusatzstoffen, Ammoniak, Fließverbesserern, Antioxidationsmitteln, Stabilisatoren, Dispergiermitteln, Weichmachern, rheologischen Zusatzstoffen, Weichmachern, antimikrobiellen Mitteln, Farbstoffen, optischen Aufhellern, Ultraviolettabsorbern, Antioxidationsmitteln.

11. Bedruckter oder beschichteter Gegenstand umfassend ein Substrat und die Zusammensetzung nach Anspruch 1.

12. Gegenstand nach Anspruch 11:
(i) wobei das Substrat cellulosehaltig ist;
(ii) wobei der Gegenstand ein Lebensmittelverpackungsgegenstand ist; oder
(iii) wobei der Lebensmittelverpackungsgegenstand ein Getränkebecher oder ein Eiscremebecher oder -eimer ist.

13. Verfahren zur Herstellung eines bedruckten Gegenstands, umfassend Aufbringen der Zusammensetzung nach Anspruch 1 auf ein Substrat und das Härten der Zusammensetzung.

14. Verfahren nach Anspruch 13, ferner umfassend die Schritte des Bildens und Siegelns der Beschichtung, um einen Lebensmittelverpackungsgegenstand zusammenzusetzen.

15. Verfahren nach Anspruch 14, wobei das Siegelverfahren Heißluftsiegeln oder Ultraschallsiegeln umfasst oder wobei der Lebensmittelverpackungsgegenstand ein Getränkebecher oder ein Eiscremebecher oder -eimer ist.

## Revendications

1. Composition de revêtement barrière, comprenant
(a) 5 à 50 % en poids, par rapport au poids total de la composition, d'une ou plusieurs résines hydrodispersibles, la ou les résines hydrodispersibles ayant un indice d'acide (AN) compris entre 50 et 500 ;
(b) 0 à 30 % en poids, par rapport au poids total de la composition, d'une ou plusieurs corésines, la ou les corésines ayant une température de transition vitreuse (T_{g}) comprise entre 50 et 150 °C et/ou une température de fusion (Tₘ) comprise entre 50 et 150 °C ;
(c) 1 à 30 % en poids, par rapport au poids total de la composition, d'une ou plusieurs cires fondantes, au moins une des cires ayant un point de fusion inférieur ou égal à 100 °C ; et
(d) 10 à 90 % en poids, par rapport au poids total de la composition, d'eau ;
la composition étant pratiquement exempte de styrène et contenant au moins 20 % en poids de composants biosourcés, par rapport au poids total de la composition, et au moins l'une parmi les résines hydrodispersibles, les corésines ou les cires fondantes sont biodégradables ;
dans laquelle la ou les résines dispersibles dans l'eau comprennent l'un ou plusieurs parmi un polyacrylique, un copolymère éthylène-acide acrylique (EAA), éthylène-alcool vinylique (EVA), un polyester ou un polyuréthane, et des mélanges et copolymères de ceux-ci ;
la teneur en composants biosourcés étant mesurée selon la norme ASTM D6866-04.

2. Composition selon la revendication 1 :
(i) dans laquelle la cire fondante a un point de fusion compris entre 40 et 100 °C ;
(ii) dans laquelle une ou plusieurs résines dispersibles, une ou plusieurs corésines et/ou une ou plusieurs cires fondantes contiennent du carbone biosourcé ; ou
(iii) dans laquelle la ou les cires sont choisies dans le groupe constitué par les cires de : polyéthylène (PE), polypropylène (PP), EAA, EVA, PHBV, paraffine, polytétrafluoroéthylène, amide, carnauba, son de riz, huile de soja hydrogénée et des mélanges de celles-ci.

3. Composition selon la revendication 1 :
(i) dans laquelle une ou plusieurs cires sont biodégradables ; ou
(ii) dans laquelle une ou plusieurs cires contiennent au moins 1 % en poids de carbone biosourcé.

4. Composition selon la revendication 1 dans laquelle une ou plusieurs résines dispersibles et/ou une ou plusieurs corésines contiennent au moins 1 % en poids de carbone biosourcé.

5. Composition selon la revendication 4, dans laquelle une ou plusieurs résines dispersibles et/ou une ou plusieurs corésines sont des polymères ou copolymères dérivés d'un ou plusieurs monomères contenant du carbone biosourcé, le ou les monomères contenant du carbone biosourcé comprenant facultativement des fragments acrylate, acide acrylique, alcool, polyol, amine, polyamine, acide carboxylique, acide polycarboxylique, alcool vinylique, acétate de vinyle, hydroxyamine, isocyanate ou polyisocyanate.

6. Composition selon la revendication 1 :
(i) dans laquelle une ou plusieurs corésines comprennent un ou plusieurs polyacryliques, copolymères éthylène-acide acrylique (EAA), éthylène-alcool vinylique (EVA), polyesters ou polyuréthanes, et des mélanges et copolymères de ceux-ci ;
(ii) comprenant 1 à 30 % en poids, par rapport au poids total de la composition, de la ou des corésines ; ou
(iii) dans laquelle une ou plusieurs résines dispersibles et/ou une ou plusieurs corésines sont biodégradables ; facultativement, dans laquelle une ou plusieurs résines dispersibles ou corésines sont choisies dans le groupe constitué par : polyester, poly(acide lactique) (PLA), polycaprolactone (PCL), polymalate (PMA), polyesteramide (PEA), polyhydroxyalcanoate (PHA), polyhydroxyvalérate (PHV), polyhydroxybutyrate-co-hydroxyvalérate (PHBV), polyhydroxyhexanoate (PHH), poly(succinate de butylène) (PBS), poly(succinate de butylène-co-adipate de butylène) (PBSA), poly(adipate de butylène-co-téréphtalate) (PBAT), poly(furanoate d'éthylène) (PEF), poly(alcool vinylique) (PVA), poly(acide glycolique), polyurée polyaspartique aliphatique, polymère de soja, et des mélanges et copolymères de ceux-ci.

7. Composition selon la revendication 1, dans laquelle au moins une cire se présente sous la forme d'une dispersion de cire/copolymère éthylène-acide acrylique ; facultativement, dans laquelle la dispersion de cire/copolymère éthylène-acide acrylique comprend de la cire de carnauba.

8. Composition selon la revendication 1 :
(i) comprenant en outre un agent de réticulation choisi dans le groupe constitué par le carbonate d'ammonium et de zinc, le carbonate d'ammonium et de zirconium, et des combinaisons de ceux-ci ;
(ii) comprenant en outre un ou plusieurs solvants organiques choisis dans le groupe constitué par l'éthanol, l'isopropanol, le N-propanol, les glycols et les éthers de glycol ; ou
(iii) la composition étant repulpable et compostable et pratiquement exempte de métaux lourds.

9. Composition selon la revendication 1, qui, une fois durcie, fournit un revêtement durci qui forme un joint à air chaud lorsqu'elle est placée face contre face (AA) ou face contre dos (AB) et scellée à différentes températures comprises entre 200 et 550 °C pendant 1,24 seconde sous une pression de 400 newtons pendant 1,9 seconde, ledit joint satisfaisant un essai de scellage à air chaud, atteignant une déchirure du papier de 100 % dans une plage comparable à celle du LDPE (AA : inférieure à 300 °C) sans combustion ;
facultativement, le revêtement durci présentant une valeur Cobb à 30 min inférieure à 10 g/m², une résistance au blocage en rouleau < 100 gF/pouce et une valeur kit d'au moins 8.

10. Composition selon la revendication 1, comprenant en outre un ou plusieurs additifs choisis dans le groupe constitué par les charges, les antimousses, les agents mouillants, les agents égalisateurs, les stabilisants colloïdaux, les modificateurs de rhéologie, les biocides, les pesticides, les tensioactifs, les promoteurs d'adhésion, les silicones, les stabilisants à la lumière, les additifs de dégazage, l'ammoniac, les promoteurs d'écoulement, les antioxydants, les stabilisants, les dispersants, les plastifiants, les additifs rhéologiques, les plastifiants, les antimicrobiens, les colorants, les azurants optiques, les absorbeurs d'ultraviolets et les antioxydants.

11. Article imprimé ou revêtu comprenant un substrat et la composition selon la revendication 1.

12. Article selon la revendication 11 :
(i) dans lequel le substrat est cellulosique ;
(ii) dans lequel l'article est un article d'emballage alimentaire ; ou
(iii) dans lequel l'article d'emballage alimentaire est un gobelet pour boisson ou un pot ou une coupe pour crème glacée.

13. Procédé de préparation d'un article imprimé, comprenant le dépôt de la composition selon la revendication 1 sur un substrat et le durcissement de la composition.

14. Procédé selon la revendication 13, comprenant en outre les étapes de formation et de scellage du revêtement pour assembler un article d'emballage alimentaire.

15. Procédé selon la revendication 14, dans lequel le processus de scellage implique un scellage à air chaud ou un scellage par ultrasons, ou dans lequel l'article d'emballage alimentaire est un gobelet pour boisson ou un pot ou une coupe pour crème glacée.
